# EUROPEAN PATENT APPLICATION

(11) **EP 2 292 494 A1**
(43) Date of publication of application: **09.03.2011**
(21) Application number: 09773337.2
(22) Date of filing: 22.06.2009
(51) Int. Cl.: B62D 1/19

(54) **IMPACT-ABSORBING STEERING DEVICE**

(30) Priority: 30.06.2008 JP 2008170813
(71) Applicant: JTEKT Corporation, Osaka-shi Osaka 542-8502 (JP)
(72) Inventor: TANIOKA, Yasuhiro, Osaka-shi Osaka 542-8502 (JP); NAKAJIMA, Terukazu, Osaka-shi Osaka 542-8502 (JP); SUMIDA, Takashi, Osaka-shi Osaka 542-8502 (JP); KAWADA, Yoshikazu, Osaka-shi Osaka 542-8502 (JP)
(74) Representative: TBK-Patent
(86) International application number: PCT/JP2009/061330
(87) International publication number: WO 2010/001759

(57) **Abstract**

An upper bracket (4) for mounting a column (2) to a vehicle body (6) includes a column support portion (4a) which is press-fitted on an outer periphery of the column through axial press-fitting action with a predetermined interference between the column and the column support portion. Hence, the column (2) is in relative press-fit relation to the bracket (4) and is normally in pressure contact with the column support portion (4a). Therefore, if a secondary collision exerts an impact force on the column (2) pushing the column in the axial direction, the column (2) is moved as generating strong friction with the column support portion (4a). Accordingly, the impact energy of the secondary collision is attenuated by the friction. Thus, a shock absorbing steering apparatus featuring a simple structure ensuring a stable operation can be provided.

## Description

### Technical Field

The present invention relates to a shock absorbing steering apparatus mounted in automotive vehicles.

### Background Art

The shock absorbing steering apparatus is adapted to absorb impact energy of a secondary collision of a driver with a steering wheel when an automotive vehicle encounters a collision. More specifically, in a case where a column for supporting a steering shaft is mounted to a vehicle body by means of a bracket, for example, a breakaway capsule disengageable under a given load is interposed in between (see, for example Patent Document 1). The impact energy of the secondary collision is attenuated during the disengagement of this capsule.

There is also proposed a shock absorbing steering apparatus, for example, which includes an axially contractible column (see, for example Patent Document 2). Specifically, the column has a double tube structure wherein one cylinder tube overlaps with an outside surface of the other cylinder tube so that the cylinder tubes are capable of relative sliding movement. The steering shaft also has a double tube structure wherein a cylinder body overlaps with an outside surface of a shaft body having an elongated (noncircular) section. The steering shaft further includes a resin projection attached to the cylinder body and fitted in a groove formed in the outside surface of the shaft body. In the shock absorbing steering apparatus of such an arrangement, the impact energy of the secondary collision is attenuated by shearing of the resin projection.

Of the above-described known shock absorbing steering apparatuses, the apparatus arranged to employ the capsule has a problem of instable breakaway load resulting from varying tightening torque on bolt in the capsule or from varying bolt position.
On the other hand, the column of the double tube structure has a problem as follows: If the secondary collision exerts a force on the column in a direction intersecting the axis of the column, the upper tube closer to the steering wheel goes out of alignment with the lower tube, so that the tubes become incapable of sliding movement.

### Citation List

### Patent Literature

Patent Document 1: Japanese Unexamined Patent Publication No. 2005-14832 (FIG.2)
Patent Document 2: Japanese Unexamined Patent Publication No. 2001-130421 (FIG.2, FIG.3)

### Summary of the invention

The present invention has an object to provide a shock absorbing steering apparatus featuring a simple structure ensuring a stable operation.

According to one aspect of the present invention, a shock absorbing steering apparatus comprises: (a) a column for supporting a steering shaft; and (b) a bracket for mounting the column to a vehicle body, the bracket including a column support portion which is press-fitted on an outer periphery of the column through axial press-fitting action with a predetermined interference between the column and the column support portion, and the bracket permitting the column to be moved with friction generating between the column and the column support portion when a secondary collision exerts an impact force on the column in the axial direction thereof.

In the shock absorbing steering apparatus of the above-described arrangement, the column is in relative press-fit relation to the bracket and is normally in pressure contact with the column support portion. If the secondary collision exerts the impact force on the column in this state, pushing the column in the axial direction, the column is moved as generating strong friction with the column support portion. Hence, the impact energy of the secondary collision is attenuated by the resultant friction. The structure designed to attenuate the impact energy of the secondary collision by means of the mutual friction between the bracket and the column is simple because the column need not have a special configuration or capsule. The simple structure ensures a stable operation.
Thus, the object of providing the shock absorbing steering apparatus featuring the simple structure ensuring the stable operation can be accomplished.

In the above shock absorbing steering apparatus, the column support portion may include a portion designed to make pressure contact with the column, the portion extending from an inner circumference of the column support portion and being shaped like a cylinder the periphery of which is partially cut out.
This structure takes advantage of the cutout to maintain elasticity of the portion thereby stabilizing a state of the pressure contact. Further, the range of the cutout can be so designed as to provide a desired motion stroke of the column at the time of the impact energy absorption.

It is preferred in the above shock absorbing steering apparatus that the column is of a single tube structure and the steering shaft is a single member.
This structure ensures that the impact energy absorbing operation is assuredly accomplished because if the secondary collision exerts a force on the column in a direction intersecting the axis of the column, the force does not affect the axial movement of the column and steering shaft.

The above shock absorbing steering apparatus may have an arrangement wherein the bracket is an upper bracket in addition to which a lower bracket is provided for mounting a housing to the vehicle body, the housing being disposed at a lower part of the column, the lower bracket including a predetermined area having a lower mechanical strength than the other area so as to be bent by the impact force of the secondary collision.
In this case, the impact energy of the secondary collision can also be absorbed by the bending motion of the lower bracket.

### Brief Description of the Drawings

FIG.1 is a sectional view showing a shock absorbing steering apparatus according to one embodiment of the present invention;
FIG.2 is a group of diagrams showing an upper bracket as a single body as viewed from each one of four directions;
FIG.3 is a perspective view showing a lower bracket as a single body;
FIG.4 is a group of diagrams showing the lower bracket of FIG.3 as viewed from each one of three directions; and
FIG.5A is a fragmentary sectional view showing a part of FIG.1 for comparison with FIG.5B. FIG.5B shows, in section, an exemplary state of the apparatus having absorbed the impact energy of a secondary collision.

### Best Mode for Carrying Out the Invention

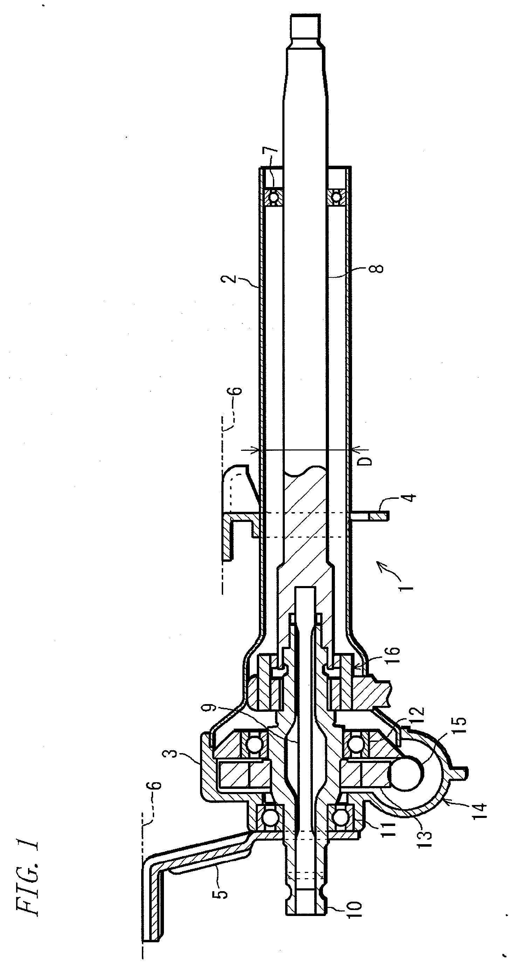

FIG.1 is a sectional view showing a shock absorbing steering apparatus according to one embodiment of the present invention. Referring to the figure, a shock absorbing steering apparatus 1 includes a column 2 and a housing 3 which constitute an outer casing. An upper bracket 4 mounted to the column 2 and a lower bracket 5 mounted to the housing 3 are fixed to a vehicle body 6 with bolts (not shown). In actual assembly, the apparatus is assembled in a slanted position such that the right-hand side of the apparatus as seen in the figure is positioned on the upper side while the left-hand side of the apparatus is positioned on the lower side. Further, the apparatus is connected with a steering wheel (not shown) on the right-hand side thereof as seen in the figure and with a pinion shaft (not shown) on the left-hand side thereof.

The column 2 is substantially shaped like a cylinder, only a left end portion of which is radially outwardly expanded in a stepwise fashion. Hereinafter, the outside diameter of the column 2 is defined as an outside diameter D of a cylindrical portion to which the upper bracket 4 is mounted. The column 2 rotatably carries therein a first steering shaft 8 by means of a rolling bearing 7. The first steering shaft 8 is connected to a second steering shaft 10 via a torsion bar 9. The torsion bar 9 has a right end thereof fixed to the first steering shaft 8 and a left end thereof fixed to the second steering shaft 10.

The second steering shaft 10 is rotatably supported by the housing 3 by means of two rolling bearings 11 and 12 mounted to the housing 3. A worm wheel 13 fixed to an outer periphery of the second steering shaft 10 is meshed with a worm gear 15 driven by a motor 14. A torque sensor 16 is disposed in opposing relation with both of the outer peripheries of the first steering shaft 8 and second steering shaft 10 so as to detect a steering torque based on a difference between rotational displacements of the two shafts 8 and 10. The motor 14 is driven based on the steering torque detected by the torque sensor 16 whereby a required steering assist force can be applied to the second steering shaft 10.

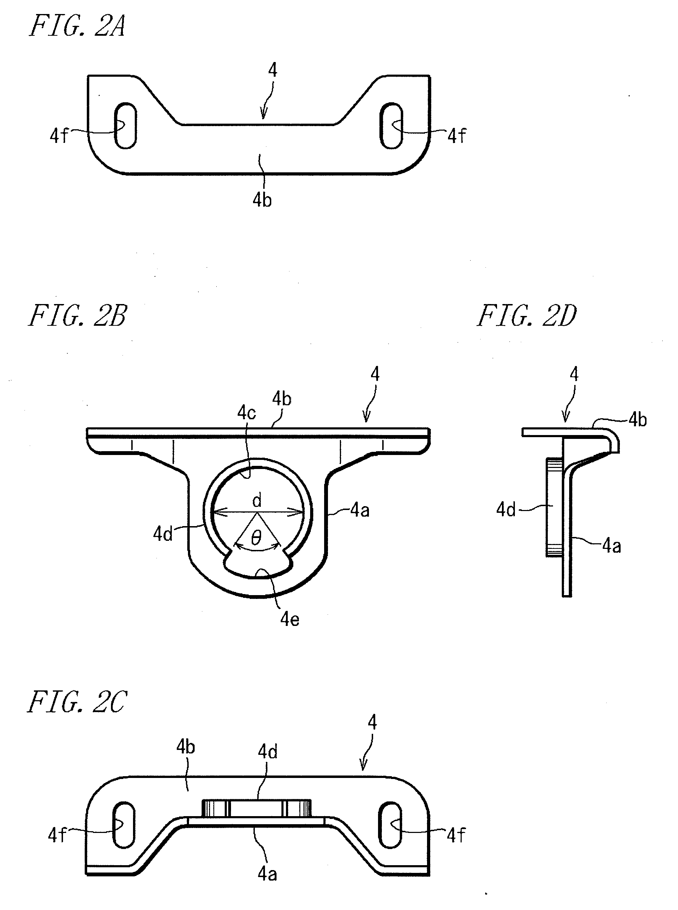

FIG.2 shows the upper bracket 4 as a single body. FIG.2A, FIG.2B, FIG.2C and FIG.2D are diagrams of the upper bracket 4 as seen from above, the left-hand side, below and the front side in relation to FIG.1, respectively. Referring to FIG.2, the upper bracket 4 is formed by, for example, press working a steel sheet and is integrally formed with a column support portion 4a to be fitted about the column 2, and a mounting portion 4b for fixing the upper bracket to the vehicle body 6 (FIG.1) with bolts.

The column support portion 4a is centrally formed with a hole 4c allowing the column 2 to penetrate therethrough. The hole 4c is so formed as to have an inside diameter d slightly smaller than the outside diameter D of the column 2 (FIG.1). Formed on an inner circumference of the column support portion 4a (perimeter of the hole 4c) is a short cylindrical pressure contact portion 4d (portion making pressure contact with the column 2) which extends in an axial direction of the column 2. It is noted, however, that the pressure contact portion 4d does not have a perfectly cylindrical shape but is shaped like a cylinder the periphery of which is partially cut out. This cutout 4e is expanded radially outwardly of the pressure contact portion 4d. Thus, the entire aperture including the hole 4c and the cutout 4e is shaped like a partially protruded circle, as shown in the figure. The cutout 4e extends in an angular range of θ° (e.g., 70°) as seen from the center of the hole 4c. The pressure contact portion 4d can maintain its elasticity by virtue of the cutout 4e, achieving a stable pressure contact relation with the column 2. Furthermore, the range of the cutout can be so designed as to provide a desired motion stroke of the column 2 during the impact energy absorption.

The mounting portion 4b is formed with two bolt holes 4f. In addition to its essential function to mount the upper bracket 4 to the vehicle body, the mounting portion 4b also has a function to suppress flexure of the whole body of the column support portion 4a when a force is exerted on the column support portion 4a in an axial direction of the column 2 (hereinafter, referred to as column-axis direction). As shown in FIG.2C, the column support portion 4a is bent into a trapezoidal shape as seen from an end face of the upper bracket thereby constituting a structure enhanced in mechanical strength against the force in the column-axis direction.

The upper bracket 4 of the above construction is mounted to the column 2 by press-fitting the column support portion 4a on the column 2 from the right-hand side as seen in FIG.1. Namely, the upper bracket 4 is press-fitted on an outer periphery of the column 2 through press-fitting action in the column-axis direction with a predetermined interference (D-d), whereby the upper bracket 4 is mounted to the column 2. The column 2 is in relative press-fit relation to the upper bracket 4, normally making pressure contact with the column support portion 4a.

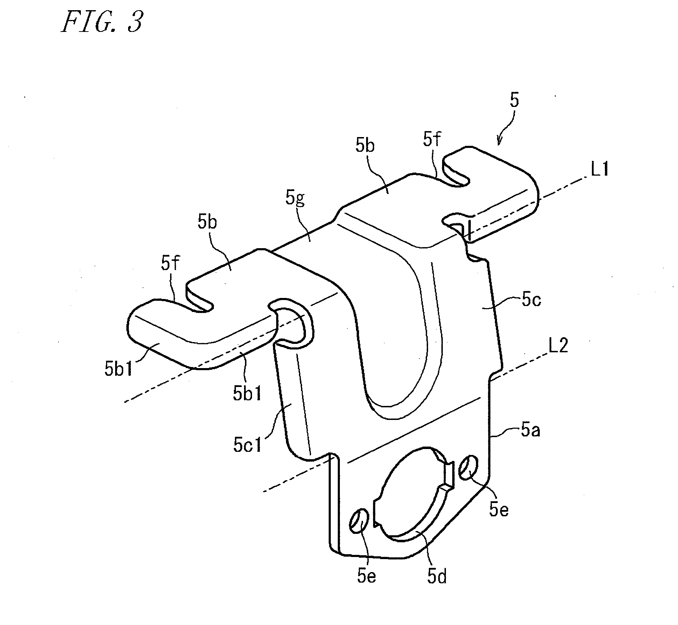

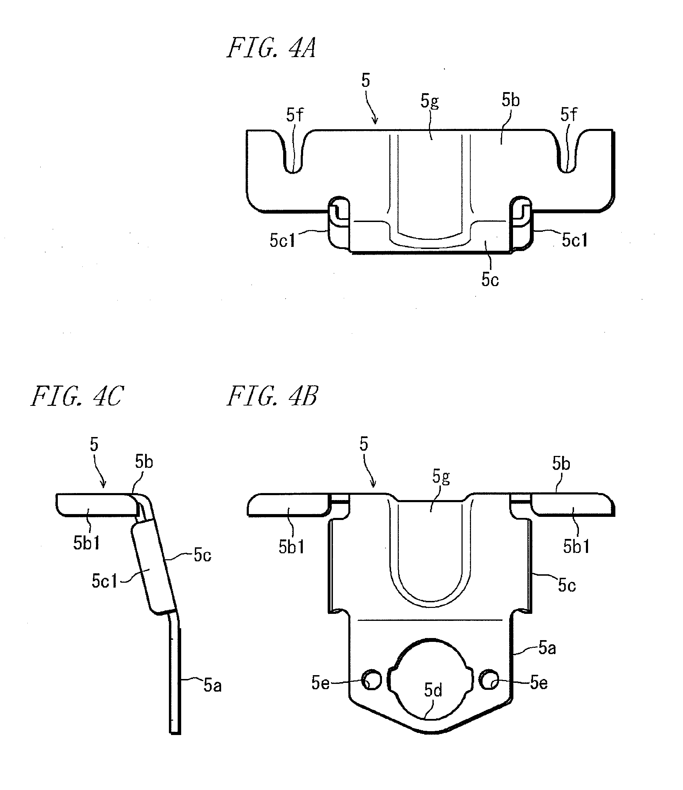

FIG.3 is a perspective view showing the lower bracket 5 as a single body. FIG.4A, FIG.4B and FIG.4C are diagrams showing the lower bracket of FIG.3 as viewed from each one of three directions. Referring to FIG.3 and FIG.4, the lower bracket 5 is formed by, for example, press working a steel sheet and is integrally formed with a housing support portion 5a fixed to the housing 3 (FIG.1); a mounting portion 5b for fixing the lower bracket to the vehicle body 6 (FIG.1) with bolts; and an interconnecting portion 5c between these members.

The housing support portion 5a is formed with a hole 5d allowing the second steering shaft 10 to penetrate therethrough, and two bolt holes 5e for bolts to fix the lower bracket 5 to the housing 3. The mounting portion 5b is formed with two bolt holes 5f. The bolt hole 5f has an opening on one side to allow the lower bracket 5 to be insertingly fixed between the vehicle body and the bolt heads after screwing the bolts partially into the vehicle body.

The lower bracket 5 is metal worked at a number of places so as to be increased in the mechanical strength. For example, the lower bracket is formed with a strength enhancement dent 5g which extends from the mounting portion 5b to the interconnecting portion 5c. Further, edges 5b1 of the mounting portions 5b and edges 5c1 of the interconnecting portion 5c are also subjected to bending. The mounting portions 5b and the interconnecting portion 5c are made less deformable by such working processes and this also makes the housing support portion 5a fixed to the housing 3 less deformable.
On the other hand, a boundary between the housing support portion 5a and the interconnecting portion 5c and a boundary between the mounting portion 5b and the interconnecting portion 5c, as shown in FIG.3, are lower in strength than the other areas. Accordingly, the lower bracket is prone to be bent on phantom fold lines L1, L2 represented by chain double-dashed lines in the figure.

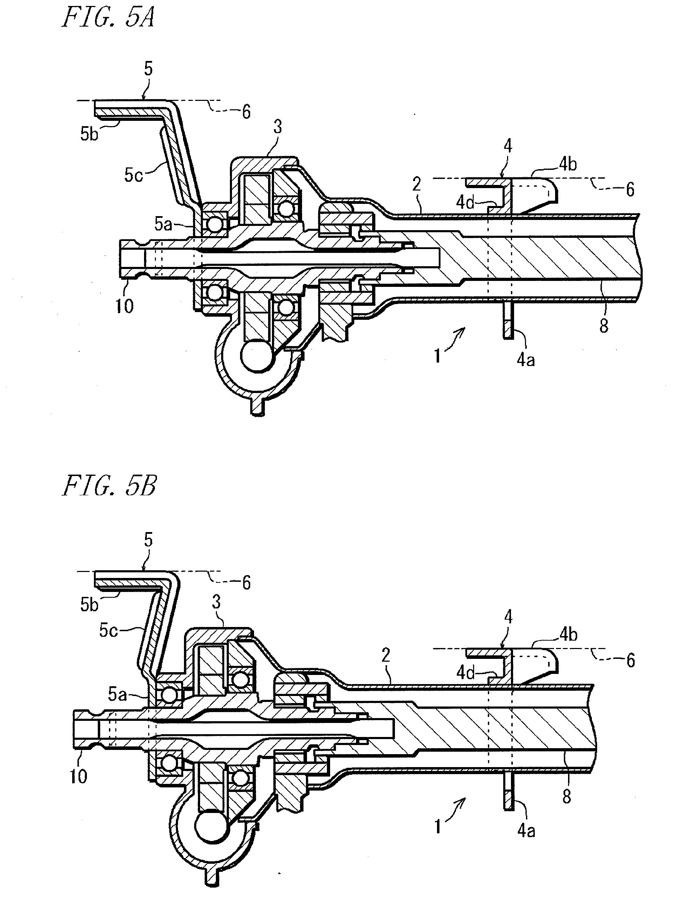

FIG.5A is a sectional view showing a part of FIG.1 for comparison with FIG.5B. FIG.5B shows, in section, an exemplary state of the apparatus having absorbed the impact energy of the secondary collision. It is noted that FIG.5B shows the motion stroke of the column 2 with exaggeration to enhance the clarity of the change in the state of the apparatus between before and after having absorbed the impact energy.

If an automotive vehicle having the shock absorbing steering apparatus 1 of the above-described construction reliably mounted to the vehicle body 6, as shown in FIG.1, encounters a collision, a secondary collision of a driver exerts an impact force, pushing the column 2 and the housing 3 in the axial direction (leftward direction as seen in FIG.5). At the upper bracket 4, the column 2 in pressure contact with the pressure contact portion 4d of the column support portion 4a is moved as generating strong friction with the column support portion 4a (pressure contact portion 4d) (FIG.5B). The impact energy of the secondary collision is attenuated by the friction.

The structure adapted to attenuate the impact energy of the secondary collision by means of the mutual friction between the upper bracket 4 and the column 2 is simple because the column need not have a special configuration or capsule. Hence, the structure ensures a stable operation. Thus is provided the shock absorbing steering apparatus 1 featuring the simple structure ensuring the stable operation. In contrast to the structure employing the capsule, the apparatus does not involve the fall of the column 2 because the upper bracket 4 still supports the column 2 even after the shock absorbing operation. In the event of collision, therefore, the apparatus can maintain as large a front space of a driver's seat as that before the occurrence of the collision.

On the other hand, the lower bracket 5 is in a state shown in FIG.5B as mountain-folded on the phantom fold line L1 shown in FIG.3 and valley-folded on the phantom fold line L2 shown in FIG.3. That is, the impact energy of the secondary collision can also be absorbed by such a bending motion of the lower bracket 5.
As shown in FIG.1, the column 2 is of a single tube structure and the first steering shaft 8 is a jointless single member. Therefore, if the secondary collision exerts a force on the column 2 in a direction intersecting the axis of the column, the force does not affect the axial movement of the column 2 and first steering shaft 8, so that the shock absorbing steering apparatus can assuredly accomplish the shock absorbing operation.

According to the above embodiment, the column 2 shown in FIG.1 basically has a cylindrical shape except for the left end portion thereof. In the light of easy press fitting of the upper bracket 4, however, the column may be configured such that only a portion in the vicinity of the upper bracket 4 and a predetermined range extending rightward therefrom has the diameter D while the rest portion on the right has a diameter smaller than D. The predetermined range may be large enough to cover the motion stroke of the column 2 at the time of the impact energy absorption.

## Claims

1. A shock absorbing steering apparatus comprising:
a column for supporting a steering shaft; and
a bracket for mounting the column to a vehicle body, the bracket including a column support portion which is press-fitted on an outer periphery of the column through axial press-fitting action with a predetermined interference between the column and the column support portion, and the bracket permitting the column to be moved with friction generating between the column and the column support portion when a secondary collision exerts an impact force on the column in the axial direction thereof.

2. The shock absorbing steering apparatus according to Claim 1, wherein the column support portion includes a portion designed to make pressure contact with the column, the portion extending from an inner circumference of the column support portion and being shaped like a cylinder the periphery of which is partially cut out.

3. The shock absorbing steering apparatus according to Claim 1, wherein the column is of a single tube structure and the steering shaft is a single member.

4. The shock absorbing steering apparatus according to Claim 1, wherein the column support portion includes a portion designed to make pressure contact with the column, the portion extending from an inner circumference of the column support portion and being shaped like a cylinder the periphery of which is partially cut out and
wherein the column is of a single tube structure and the steering shaft is a single member.

5. The shock absorbing steering apparatus according to any one of Claims 1 to 4, wherein the bracket is an upper bracket in addition to which a lower bracket is provided for mounting a housing to the vehicle body, the housing disposed at a lower part of the column, the lower bracket including a predetermined area having a lower mechanical strength than the other area so as to be bent by the impact force of the secondary collision.
